(19) Europäisches Patentamt

European Patent Office

Office européen des brevets

(11) Veröffentlichungsnummer: **0 484 662 A2**

(12) **EUROPÄISCHE PATENTANMELDUNG**

(21) Anmeldenummer: **91115918.4**

(22) Anmeldetag: **19.09.91**

(51) Int. Cl.5: **H04B 7/204**

(30) Priorität: **03.11.90 DE 4034979**

(43) Veröffentlichungstag der Anmeldung:
**13.05.92 Patentblatt 92/20**

(84) Benannte Vertragsstaaten:
**DE FR GB IT**

(71) Anmelder: **Messerschmitt-Bölkow-Blohm
Gesellschaft mit beschränkter Haftung
Robert-Koch-Strasse
W-8012 Ottobrunn(DE)**

(72) Erfinder: **Braun, Günter, Dr. Dipl.-Ing.
Stöberlstrasse 7
W-8000 München 21(DE)**

(54) **Nachrichtensystem zur bidirektionalen Nachrichtenübertragung zwischen Bodenstation mit Hilfe eines Nachrichtensatelliten.**

㉝ Die Erfindung bezieht sich auf ein Nachrichtensystem für Mobilfunkanwendungen zur bidirektionalen Nachrichtenübertragung zwischen Bodenstationen (3) mit Hilfe eines Nachrichtensatelliten, wobei für die Aufwärtsstrecke von den Bodenstationen zu dem Satelliten Aufwärtssignale im Frequenzmultiplex bzw. mit unterschiedlichen Frequenzen pro Nachrichtenkanal und für die Abwärtssignale vom Satelliten zu den Bodenstationen Abwärtssignale im Zeitmultiplex gesendet werden. Um das System mit einem hohen Wirkungsgrad auszustatten, wird vorgeschlagen, für die Abwärtssignale auf seiten des Satelliten eine Sendeeinrichtung (10 bis 15) mit einer einen einzigen Punktstrahl (FS) kleiner Keulenbreite abgebenden Sendeantenne (15) und einer Ablenkeinrichtung (14) vorzusehen, um den Punktstrahl zeitlich nacheinander auf unterschiedliche Teilgebiete, sog. virtuelle Spots (S$_j$) zu richten.

FIG. 1

EP 0 484 662 A2

Die Erfindung bezieht sich auf ein Nachrichtensystem gemäß dem Oberbegriff des Patentanspruches 1.

Derartige Nachrichten- bzw. Satellitsysteme für Mobilfunkanwendungen zur Nachrichtenübertragung zwischen Teilnehmer- oder Bodenstationen über einen Nachrichtensatelliten unterliegen einer Reihe von Anforderungen an die Bodenstationen und die satellitenseitigen Systeme, die mit konventionellen Mitteln nicht befriedigend gelöst werden können.

Eine entscheidende Einschränkung ist die Größenbegrenzung der Antennen der Bodenstationen, die z.B. als Planarantennen in Dächer von Personenkraftwagen integriert werden oder in transportablen Teilnehmergeräten in der Größe eines Aktenkoffers untergebracht werden sollen. Die Forderung nach kostengünstiger Herstellung, wie auch gesundheitliche Aspekte, machen zudem eine Begrenzung der vom Teilnehmergerät abgestrahlten Radiofrequenzleistung, d.h. RF-Leistung, auf max. einige Watt erforderlich.

Auf der Satellitenseite ist auf einen hohen RF/DC-Wirkungsgrad zu achten, d.h. mit einer niedrigen Gleichstromleistung hohe Radioleistung zu erzielen, um bei den zumeist leistungsbegrenzten Satelliten eine möglichst hohe und damit wirtschaftliche Kanalkapazität zu erreichen. Ist darüber hinaus ein großes Bedeckungsgebiet auf der Erde vom Nachrichtensatelliten zu erfassen bzw. auszuleuchten, so sollte bei dem sendeseitig dann unvermeidlichen Mehrfachstrahl-Antennensystem aus wirtschaftlichen Gründen eine flexible Zuordnung von Teilnehmerkanälen zu Punktstrahlen möglich sein.

Bei konventionellen Nachrichtensatelliten werden üblicherweise sog. "transparente" Transponder eingesetzt, die die Signale mit Ausnahme einer Frequenzumsetzung nicht verändern und damit auf der Aufwärts- und Abwärtsstrecke das gleiche Zugriffsverfahren verwenden. Neuere Vorschläge greifen zur Übertragung hoher Datenraten und zur Verkleinerung von Bodenstationsantennen oft auf Mehrfachstrahlantennen zurück. Sie nutzen ebenfalls meist transparente Transponder mit gleichem Zugriffsverfahren auf der Aufwärts- und Abwärtsstrecke, wobei sowohl Zeitmultiplex (TDMA) als auch Frequenzmultiplex (FDMA) bzw. pro Trägerfrequenz ein Einzelkanal (SCPC) verwendet werden; vgl. Lenormand, R. et al, "A 30/20 GHz MULTIBEAM ARRAY ANTENNA SUITABLE FOR FUTURE HIGH RATE TDMA EUROPEAN SATELLITE SYSTEMS", IEEE AP-S, Juni 1987, S. 179-183, bzw. Rosen, H.A., "FREQUENCY ADDRESSABLE BEAMS FOR SATELLITE COMMUNICATIONS", Telecom 1987, Genf. Eine hiervon abweichende Lösung, die für die Aufwärts- und Abwärtsstrecke Zeitmultiplex mit sog. hüpfenden Strahlen (hopping beams) verwendet, ist ebenfalls bekannt; vgl. Campanella, J. et al, "A USERS PERSPECTIVE OF THE ACTS HOPPING BEAM TDMA SYSTEM", Proc. AIAA, März 1990, S. 484 - 489.

Derart aufgebaute Systeme können den oben beschriebenen Anforderungen an Satellitsysteme für Mobilfunkanwendungen jedoch nicht optimal gerecht werden.

In der DE-OS 32 00 249, die der US-PS 44 25 639 entspricht, wird bereits der Vorteil einer Verknüpfung von Zeitmultiplex-Signalen höherer Bit-Rate auf der Abwärtsstrecke mit frequenzmäßig verschachtelten Kanälen auf der Aufwärtsstrecke herausgestellt, d.h. eine Kombination von Zeitmultiplex und Frequenzmultiplex. Hierbei werden mehrere feste, lediglich in der Übertragungskapazität rekonfigurierbare Punktstrahlen für Aufwärts- und Abwärtsstrecke verwendet. Anzahl und Größe der Satelliten- Punktstrahlen sind hierbei für Aufwärts- und Abwärtsstrecke gleich, wobei die jedem Punktstrahl zugeordnete Frequenzbandbreite für Aufwärts- und Abwärtsstrecke ebenfalls gleich groß ist.

Eine solche Anordnung erfordert allerdings bodenseitig Antennen mit hohem Gewinn und entsprechender Wirkfläche, um den satellitenseitigen Aufwand an Gleichstromleistung und Masse in einem realisierbaren Rahmen zu halten. Diese Bedingung kann von Bodenstationen für den Satelliten-Mobilfunk jedoch nicht erfüllt werden. Die Forderung nach kleinen Bodenstationsantennen läßt sich nur durch eine hohe äquivalente Strahlungsleistung des Satelliten realisieren. Wegen der begrenzten Sendeleistung des Satelliten müssen die Punktstrahlen deshalb relativ eng gebündelt sein, so daß die den jeweiligen Punktstrahlen entsprechenden Bodenflächen auf der Erde ebenfalls relativ klein sind. Bei großen Bedeckungsgebieten sind demnach eine Vielzahl derartiger Punktstrahlen notwendig, und damit auch entsprechend viele Strahlformungsnetzwerke und entsprechend viele Trägerfrequenzen. Der Betrieb einer derartigen Mehrfachstrahl-Senderantenne mit Frequenzmultiplexsignalen aber auch mit mehreren gleichzeitig in verschiedenen Punktstrahlen abgestrahlten Zeitmultiplexsignalen führt selbst bei eingeschränkter Flexibilität in der Zuordnung von Kanälen zu Punktstrahlen zu einem hohen Leistungs- und Massebudget für Strahlformungsnetzwerke und Schaltmatrizen. Darüber hinaus erfordert ein Mehrträgersystem zur Vermeidung von Intermodulationsverzerrungen den Einsatz linearer Leistungsverstärker, die den erwähnten RF/DC-Wirkungsgrad weiter herabsetzen.

Der Erfindung liegt die Aufgabe zugrunde, eine geeignete Kombination von Zugriffsverfahren anzugeben, mit der in optimaler Weise die beschriebenen Anforderungen erfüllt und die Nachteile von Zeitmultiplex bzw. Frequenzmultiplex-Zugriffsverfahren weitgehend vermieden werden.

Diese Aufgabe ist gemäß der Erfindung durch die im kennzeichnenden Teil des Patentanspruches 1 angegebenen Merkmale gelöst.

Die Erfindung ist somit eine Kombination von Zugriffsverfahren, welche auf der Abwärtsstrecke im Zeitmultiplex unter Verwendung einer elektronisch steuerbaren satellitenseitigen Sendeantenne mit einem ablenkbaren Punktstrahl, einem sog. "flying spot" kleiner Keulenbreite, viele kleine Bodenstationen in einem großen Bedeckungsgebiet zeitlich nacheinander erreicht, während auf der Aufwärtsstrecke Frequenzmultiplex zur Trennung der Teilnehmerkanäle benutzt wird.

Vom Satelliten aus werden die Bodenstationen in schneller zeitlicher Reihenfolge nacheinander mit Abwärtssignalen in Form zeitlich begrenzter Signalpakete, sog. "bursts" bedient. Der ablenkbare Punktstrahl weist eine wesentlich geringere Keulenbreite auf als der bzw. die auf der Aufwärtsstrecke verwendeten Strahlen. Die Summe der Bandbreiten aller in einem von dem ablenkbaren Punktstrahl überdeckten Teilgebiet, dem sog. "virtuellen Spot", gelegenen und gleichzeitig betriebenen Teilnehmerstationen ist auf der Aufwärtsstrecke geringer als die Bandbreite des Signalpaketes, mit dem die gleichen Teilnehmerstationen mit Abwärtssignalen versorgt werden. Die Anzahl der für die Abwärtsstrecke geltenden virtuellen Spots ist erheblich größer als die Anzahl der für die Aufwärtsstrecke geltenden und von der oder den Satelliten-Empfangsantennen erfaßten Teilgebiete. Für die Aufwärtsstrecke kann z.B. nur eine Satelliten-Empfangsantenne verwendet werden.

Ein Zeitmultiplexsystem mit einem einzigen RF-Träger erlaubt den Einsatz von Leistungsverstärkern hohen Wirkungsgrades, besitzt nur ein Strahlformungsnetzwerk und keine Schaltmatrix. Die zeitliche Verschachtelung der Kanäle oder Kanalgruppen und ihre zeitlich gestaffelte Ausrichtung auf das jeweils gewünschte Empfangsgebiet auf der Erde kann von schnellen digitalen Schaltkreisen mit geringem Masse- und Leistungsaufwand in Verbindung mit einer aktiven elektronisch gesteuerten Gruppenantenne vorgenommen werden. Jeder Zeitschlitz innerhalb der zeitlichen Verschachtelung der Abwärtssignale kann flexibel jedem beliebigen virtuellen Spot auf der Erde zugeordnet werden.

Dabei ist bei n Zeitschlitzen und m virtuellen Spots im praktischen Falle, in dem n größer als m ist, sowohl eine gleichmäßige Verteilung der Kanalkapazität auf alle virtuellen Spots im Bedeckungsgebiet als auch eine Konzentration der Kanalkapazität auf nur einen oder wenige virtuelle Spots möglich. Will man die Schaltzeiten der elektronisch gesteuerten Antenne verlängern, so ist bei reduzierten Anforderungen an die Flexibilität auch die Zuordnung von festverschalteten Kanalgruppen zu einem dann längeren Zeitschlitz möglich.

Die Verwendung des Zeitmultiplex-Prinzipes für die Aufwärtsstrecke würde bei vielen, z.B. mehreren Tausend direkt mit dem Satelliten kommunizierenden bzw. auf den Satelliten "zugreifenden" Teilnehmern wegen des ungünstigen Tastverhältnisses seitens der Bodenstationen eine hohe abzustrahlende RF-Pulsleitung erfordern und zudem ein Synchronisationsproblem aufwerfen. Als Empfangsantenne auf dem Satelliten würde, wie auf der Sendeseite, eine elektronisch gesteuerte Antenne benötigt werden. Beim Einsatz eines Frequenzmultiplex- (bzw. SCPC-) Zugriffsverfahrens auf der Aufwärtsstrecke läßt sich jedoch wegen des von der Bodenstation im zugewiesenen Frequenzband abgegebenen Träger- bzw. CW-Signales bei gleichen energetischen Verhältnissen die RF-Spitzenleistung drastisch reduzieren. Damit sind bei Sendeverstärkern der Bodenstationen neben monolithisch integrierten Mikrowellenschaltungen keine diskreten Leistungstransistoren mehr erforderlich, was zu einer erheblichen Kostenreduzierung der Teilnehmergeräte führt. Zudem kann statt einer komplexen elektronisch gesteuerten Empfangsantenne auf seiten des Satelliten eine einfache, das gesamte Bedeckungsgebiet auf der Erde ausleuchtende Antenne eingesetzt werden. Synchronisationsprobleme können hierbei nicht auftreten. Der Vorteil einer einfachen satellitenseitigen Empfangsantenne wird durch den bei Frequenzmultiplex notwendigen Einsatz eines Vielträger-Demodulators zwar reduziert; als Hauptvorteil des Zugriffsverfahrens im Frequenzmultiplex auf der Aufwärtsstrecke ist jedoch das kostengünstigere Teilnehmergerät zu betrachten.

Abhängig von der Systemauslegung, von organisatorischen Gesichtspunkten und den aktuell verfügbaren Technologien ist bei der Aufwärtsstrecke auch ein Frequenzmultiplex-Zugriffsverfahren mit einem, in mehrere große Spots zerlegten Bedeckungsgebiet möglich. Hierbei ist jedem Spot ein Teilfrequenzband der Aufwärtsstrecke zugeordnet.

Für die Teilnehmereinrichtungen der Bodenstationen ergeben sich durch die dargestellte optimale Kombination von Zugriffsverfahren auch neuartige Anforderungen:

In vielen Fällen, z.B. zur Winkeltrennung von Satellitensystemen, die im gleichen Frequenzband operieren, wie auch zur qualitativ höherwertigen Übertragung von Sprachsignalen, wird wegen des erforderlichen höheren Antennengewinns eine elektronische oder mechanische Nachführung der Antenne auf seiten der Bodenstation erforderlich sein. Darüber hinaus wird die Nachführung der Antenne dann erforderlich sein, wenn das Teilnehmergerät auf einer beweglichen Plattform, z.B. einem Fahrzeug, Flugzeug oder Schiff montiert ist. Als Kriterium für die Nachführung kann die empfangene Leistung dienen, wobei sich wegen des Übertragungsverfahrens mit dem "flying spot" eine zusätzliche vom Satelliten abzustrahlende Bakenfrequenz für Nachführung und vor allem für die Akquisition empfiehlt.

Der Sendeteil der Bodenstation strahlt ein schmalbandiges Signal in einer vorgegebenen Frequenzbandbreite ab, deren Frequenzlage vom Satelliten zugewiesen wird. Die Sendeeinrichtung des Teilnehmergerätes läßt sich über den Satelliten auf alle im Betrieb des Satellitensystemes möglichen Frequenzen für die Aufwärtsstrecke einstellen.

Der Empfangsteil der Bodenstation empfängt hingegen ein sehr breitbandiges Signal in Form des erwähnten kurzen Signalpakets bzw. Bursts, wobei auf ein Signalpaket nach einer Rahmenlänge das nächste Paket folgt. Ein Signalpaket kann neben dem für den gerade empfangenden Teilnehmer bestimmten Abwärtssignal auch Informationen für andere Teilnehmer enthalten, die sich im gleichen virtuellen Spot befinden. Zusätzlich können während einer Rahmenlänge verkehrsabhängig weitere Signalpakete empfangen werden, die nur Informationen für fremde Teilnehmer enthalten. Aufgabe für den Empfangsteil des Teilnehmergerätes ist demgemäß neben dem eigentlichen Empfang die Identifikation und zeitliche Ausfilterung des eigenen Signalanteiles.

Die weiteren Baugruppen der Teilnehmergeräte bzw. Bodenstationen, wie Demodulator, Modulator, Endeinrichtungen und Nachführeinrichtung basieren auf bekannten Prinzipien.

Ein Satellitensystem gemäß der Erfindung kann sowohl mit Satelliten auf geostationären Bahnen als auch mit Satelliten auf hochinklinierten elliptischen quasistationären Bahnen eingesetzt werden.

Weitere Ausgestaltungen der Erfindung gehen aus den Unteransprüchen hervor. Die Erfindung ist in einem Ausführungsbeispiel anhand der Zeichnung näher erläutert. In der Zeichnung stellen dar:

Fig. 1
eine Darstellung eines Bedeckungsgebietes auf der Erdoberfläche, das in mehrere virtuelle Spots aufgeteilt ist, die von einem Nachrichtensatelliten gemäß der Erfindung jeweils durch einen ablenkbaren Punktstrahl (flying spot) versorgt werden;

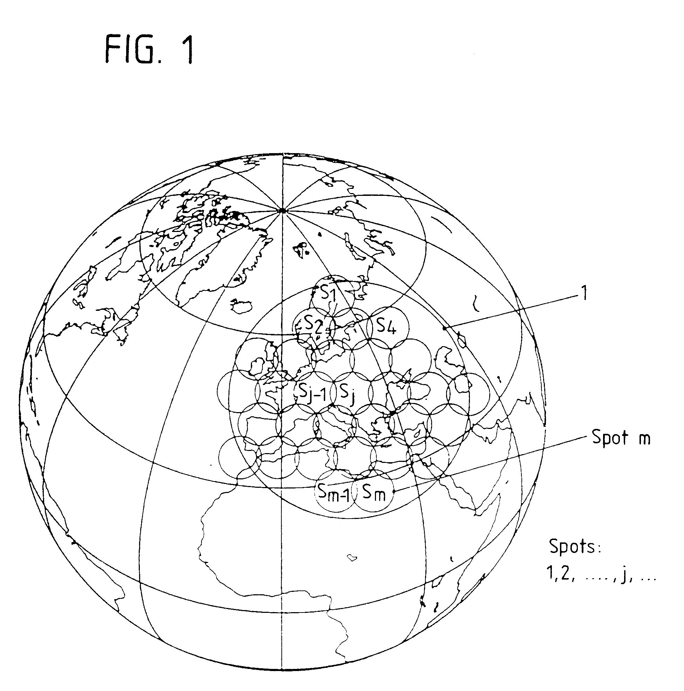

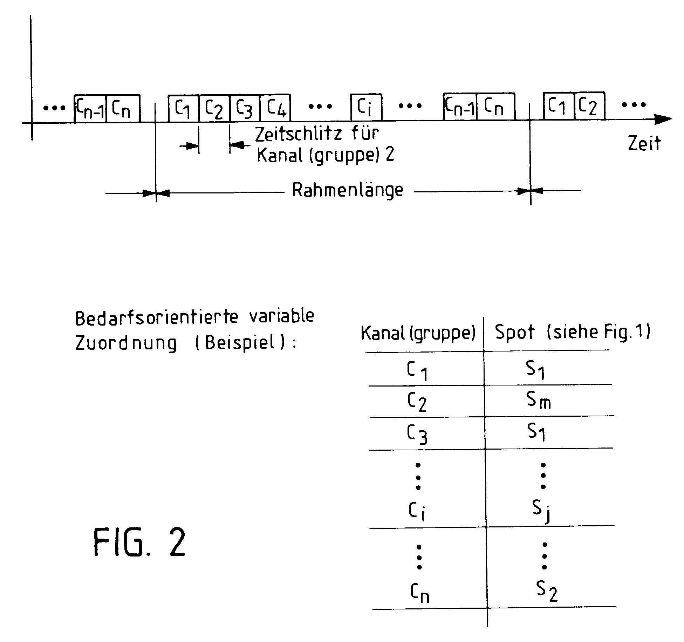

Fig. 2
schematisch die Darstellung des Zeitmultiplex-Zugriffsverfahrens auf der Abwärtsstrecke mit einer Zuordnung der einzelnen Kanäle bzw. Kanalgruppen zu den in Fig. 1 dargestellten virtuellen Spots;

Fig. 3
das in Fig. 1 dargestellte Bedeckungsgebiet mit der möglichen Anordnung von mehreren Spots auf der Aufwärtsstrecke;

Fig. 4
ein schematisches Blockschaltbild für den Nachrichtensatelliten, wobei lediglich die für die unterschiedlichen Zugriffsverfahren auf der Aufwärts- und Abwärtsstrecke notwendigen Funktionsblöcke dargestellt sind;

Fig. 5 und Fig. 6
schematische Blockschaltbilder einer Bodenstation, wobei ebenfalls nur die für die unterschiedlichen Zugriffsverfahren notwendigen Funktionsblöcke dargestellt sind.

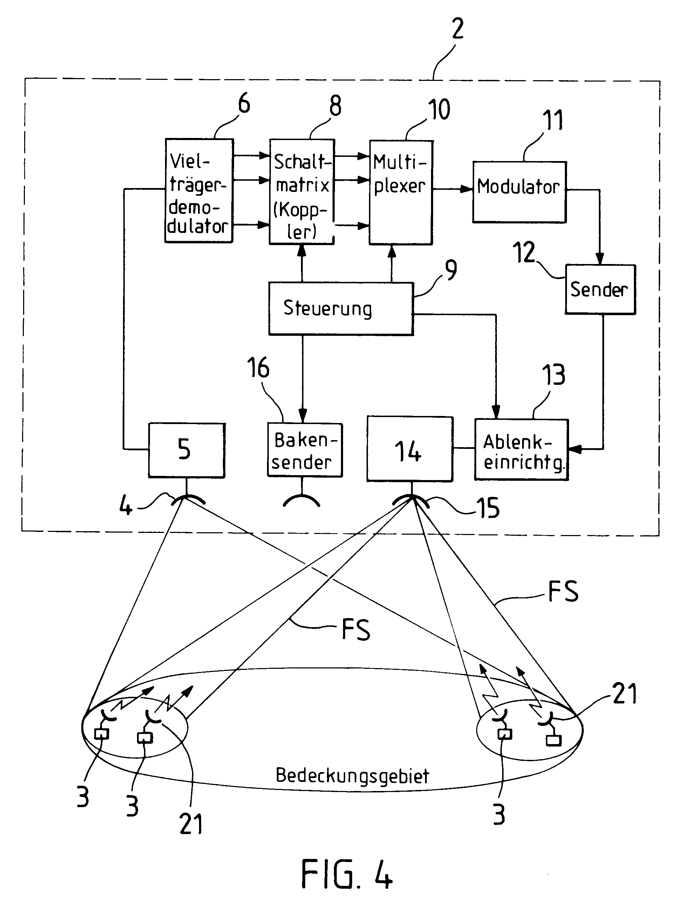

In Fig. 1 ist mit 1 ein Bedeckungsgebiet auf der Erdoberfläche gezeigt, in dem sich eine Vielzahl von Bodenstationen befinden, die untereinander über einen Satelliten Nachrichten austauschen können. Dieses Bedeckungsgebiet 1 ist aus einer Vielzahl von Teilgebieten $S_j$, sog. virtuellen Spots zusammengesetzt, die von $S_1$ bis $S_m$ durchnumeriert sind. Diese Teilgebiete $S_j$ sind die Auftreffpunkte eines schwenkbaren Punktstrahles oder flying spot FS, vgl. Fig. 4. Auf der Abwärtsstrecke zwischen Satellit und den Bodenstationen erfolgt die Übertragung in einem Zeitmultiplex-Verfahren entsprechend Fig. 2, wobei für jeden Kanal bzw. jede Kanalgruppe $C_i$ ein Zeitschlitz innerhalb einer Rahmenlänge vorgesehen ist. Innerhalb eines jeden Zeitschlitzes strahlt der Punktstrahl in einen virtuellen Spot $S_j$, wobei diese Zuordnung dem jeweiligen Bedarf angepaßt ist. In der Aufwärtsstrecke wird das Frequenzmultiplex-Verfahren verwendet, wobei von jeder Bodenstation 3 ein Punktstrahl in Richtung auf den Satelliten gesendet wird und für jeden Punktstrahl eine eigene Frequenz vorgesehen ist.

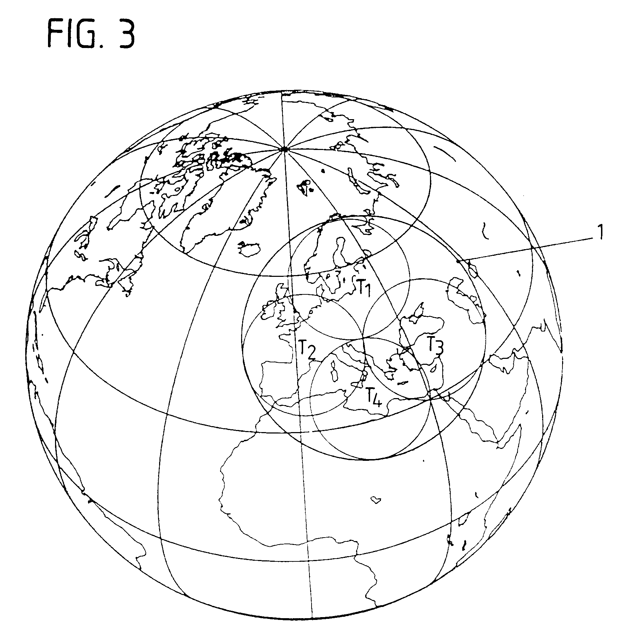

Auf seiten des Satelliten ist entweder eine Empfangsantenne vorhanden, die das ganze Bedeckungsgebiet 1 abdeckt. Oder es kann dieses Bedeckungsgebiet für die Aufwärtsstrecke entsprechend Fig. 3 in mehrere Teilgebiete, in diesem Falle vier Teilgebiete T1 bis T4, unterteilt werden, wobei jedem Teilgebiet ein Teilfrequenzband zugeordnet ist. Für die Teilgebiete ist dann satellitenseitig entweder je eine Empfangsantenne vorgesehen oder nur eine Empfangsantenne mit mehreren unabhängig voneinander wirkenden Strahlformungseinrichtungen.

In Fig. 4 ist mit 2 eine Sende/Empfangseinrichtung des Nachrichtensatelliten dargestellt. Eine Empfangsantenne 4 mit ihrem Antennennetzwerk 5 empfängt die von den Bodenstationen 3 ausgesandten Punktstrahlen und führt diese entsprechend der Kanalaufteilung einem Vielträgerdemodulator 6 zu, der alle Kanäle demoduliert und regeneriert. Eine folgende Schaltmatrix 8 wirkt als bordseitige Vermittlungseinrichtung und bestimmt zusammmen mit einem Multiplexer 10, mit dem sie auch integriert werden kann, die zeitliche Anordnung der Kanäle im seriellen Abwärtsbetrieb. Die Signale werden dann zu einem Modulator 11 und einer Sendeeinrichtung 12 geführt, deren Signal über eine Ablenkeinrichtung 13 und ein Antennennetzwerk 14 einer Sendeantenne 15 zugeleitet wird. Die Funktionsblöcke 13 bis 15 werden in der Regel als elektronisch gesteuerte aktive Gruppenantenne ausgeführt sein. Mit Hilfe der Ablenkeinrichtung 13 erzeugt die Sendeantenne 15 den Punktstrahl oder flying spot FS, der entsprechend dem obigen Zeitraster auf die einzelnen Teilgebiete entsprechend den virtuellen Spots $S_j$ gerichtet wird.

Zusätzlich wird noch mit Hilfe eines Bakensenders 16 ein Bakensignal erzeugt, das der Akquisition und der Ausrichtung der Antennen der Bodenstationen 3 dient. Die Ablenkeinrichtung 13 und der Bakensender 16 werden von einer Steuereinheit 9 angesteuert.

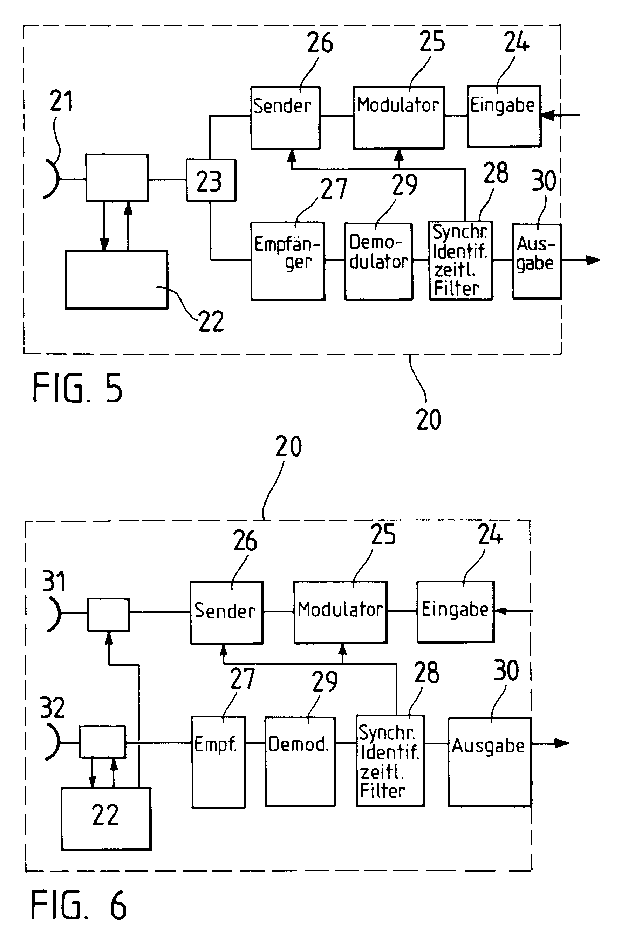

In Fig. 5 und 6 ist eine Sende/Empfangseinrichtung 20 einer Bodenstation 3 dargestellt. Diese weist eine kombinierte Sende/Empfangsantenne 21 bzw. getrennte Sende-/Empfangsantennen 31,32 auf, die mechanisch oder elektronisch mit Hilfe einer Nachführeinrichtung 22 präzise auf den Nachrichtensatelliten ausgerichtet werden können. Die Antenne 21 ist mit einem Diplexer 23 verbunden. Senderseitig ist eine Eingabeeinheit 24, ein Modulator 25 und ein Sender 26 vorgesehen, der die Signale über den Diplexer 23 zur im Sendebetrieb arbeitenden Antenne 21 oder direkt zur Antenne 31 leitet. Die von der Antenne 21 empfangenen Signale werden über den Diplexer 23 oder von Antenne 32 direkt einem Empfänger 27 zugeleitet, der mit einem Demodulator 29 verbunden ist. Diesem ist eine Einrichtung 28 zur Synchronisierung, Identifikation und zeitlichen Ausfilterung des eigenen Signalanteils nachgeschaltet. In dieser wird aus dem breitbandigen Signalpaket die für diese Bodenstation zugewiesene Nachricht ausgefiltert. Diese Nachricht wird schließlich einer Ausgabeeinheit 30 zugeführt.

Die Sendeeinrichtung strahlt in Richtung auf den Satelliten ein schmales Nutzfrequenzband ab, wobei die Frequenzlage vom Satelliten jedem Teilnehmer getrennt innerhalb des operationellen Gesamtfrequenzbandes zugewiesen wird. Der Modulator dient hierbei zur digitalen Modulation des Teilnehmersignales.

Die Empfangseinrichtung ist für den Empfang breitbandiger Signale in Form der erwähnten kurzzeitigen Signalpakete geeignet, wobei die für die jeweilige Bodenstation bestimmten Signalanteile identifiziert und zeitlich aus dem Signalpaket ausgefiltert werden. Signalein- und Signalausgabe erfolgen in herkömmlicher Art, ebenso die Stromversorgung, wobei selbstverständlich Interface-Einheiten zum Anschluß an weitere Einrichtungen, z.B. Telefax etc., vorgesehen sein können.

Ferner können für Gruppen von Bodenstationen zentrale Antennenanlagen vorgesehen werden, die ihrerseits Transponder zu den Satelliten sind.

**Patentansprüche**

1. Nachrichtensystem zur bidirektionalen Nachrichtenübertragung zwischen Bodenstationen mit Hilfe eines Nachrichtensatelliten, mit dem ein die Bodenstation enthaltendes Bedeckungsgebiet erfaßt wird und wobei für die Aufwärtsstrecke von den Bodenstationen zum Satelliten Aufwärtssignale im Frequenzmultiplex bzw. mit unterschiedlichen Frequenzen pro Nachrichtenkanal und für die Abwärtsstrecke vom Satelliten zu den Bodenstationen Abwärtssignale im Zeitmultiplex gesendet werden, **dadurch gekennzeichnet,** daß für die Abwärtssignale auf seiten des Satelliten eine Sendeeinrichtung (8 - 15) mit einer einen einzigen Punktstrahl (FS) abgebenden Sendeantenne (15) und einer Ablenkeinrichtung (13) vorgesehen ist, um den Punktstrahl (FS) zeitlich nacheinander auf unterschiedliche Teilgebiete (virtuelle Spots $S_j$) des gesamten Bedeckungsgebietes (1) zu richten.

2. Nachrichtensystem nach Anspruch 1, **dadurch gekennzeichnet**, daß für den Empfang der Aufwärtssignale auf seiten des Satelliten eine einzige, das gesamte Bedeckungsgebiet (1) erfassende Empfangsantenne (4) vorgesehen ist.

3. Nachrichtensystem nach Anspruch 1, **dadurch gekennzeichnet**, daß für den Empfang der Aufwärtssignale auf seiten des Satelliten entweder mehrere Empfangsantennen (4) oder eine Empfangsantenne mit mehreren unabhängig voneinander wirkenden Strahlformungseinrichtungen vorgesehen sind, die jeweils Teilgebiete (T1 bis T4) des Bedeckungsgebietes (1) erfassen.

4. Nachrichtensystem nach Anspruch 1, **dadurch gekennzeichnet**, daß sich die virtuellen Spots ($S_j$) überlappen.

5. Nachrichtensystem nach einem der vorhergehenden Ansprüche, **dadurch gekennzeichnet**, daß die satellitenseitige Sendeantenne (15) je nach Kanalkapazität und Systemauslegung Einzelkanäle oder Kanalgruppen ($C_i$) innerhalb eines durch das Zeitmultiplexverfahren vorgegebenen Zeitschlitzes in Richtung auf einen virtuellen Spot ($S_j$) abstrahlt.

6. Nachrichtensystem nach Anspruch 5, **dadurch gekennzeichnet**, daß die Sendeeinrichtung (10 bis 15) auf seiten des Satelliten einen Bakensender (16) zum Erzeugen einer Bakenfrequenz aufweist, mit deren Hilfe die Antennen (21) der Bodenstationen (3) ausrichtbar sind.

7. Nachrichtensystem nach einem der vorhergehenden Ansprüche, **dadurch gekennzeichnet**, daß die Bodenstationen jeweils eine Nachführeinrichtung (22) aufweisen, mit deren Hilfe die gemeinsame Sende-/Empfangsantenne (21) oder separate Sende- und Empfangsantennen (31,32) der Bodenstation (3) in Richtung auf den Nachrichtensatelliten nachführbar sind.

8. Nachrichtensystem nach Anspruch 1, **dadurch gekennzeichnet,**daß die Frequenz der Sender (26) der Bodenstationen (3) vom Nachrichtensatelliten aus zugewiesen werden kann.

9. Nachrichtensystem nach Anspruch 7 oder 8, **dadurch gekennzeichnet**, daß die Bodenstationen (3) eine breitbandige Empfangseinrichtung (27 bis 29) für die in zeitlich kurzen Signalpaketen abgegebenen Abwärtssignale aufweist, und daß diese Empfangseinrichtung eine Einrichtung (28) zur Identifikation und zeitlichen Ausfilterung des für die jeweilige Bodenstation bestimmten Signalanteiles aus den Signalpaketen aufweist.

# FIG. 1

... $C_{n-1}$ $C_n$ | $C_1$ $C_2$ $C_3$ $C_4$ ... $C_i$ ... $C_{n-1}$ $C_n$ | $C_1$ $C_2$ ...

Zeitschlitz für
Kanal (gruppe) 2

Zeit

Rahmenlänge

Bedarfsorientierte variable
Zuordnung (Beispiel):

| Kanal (gruppe) | Spot (siehe Fig. 1) |
|---|---|
| $C_1$ | $S_1$ |
| $C_2$ | $S_m$ |
| $C_3$ | $S_1$ |
| $\vdots$ | $\vdots$ |
| $C_i$ | $S_j$ |
| $\vdots$ | $\vdots$ |
| $C_n$ | $S_2$ |

# FIG. 2

FIG. 3

FIG. 4

26    25    24

21

| Sender | Modulator | Eingabe |

23

27    29    28    30

| Empfän-ger | Demo-dulator | Synchr. Identif. zeitl. Filter | Aus-gabe |

22

# FIG. 5

20

20

26    25    24

31

| Sender | Modulator | Eingabe |

32

27    29    28    30

| Empf. | Demod. | Synchr. Identif. zeitl. Filter | Ausgabe |

22

# FIG. 6